# EUROPEAN PATENT SPECIFICATION

(11) **EP 3 205 137 B1**
(45) Date of publication and mention of the grant of the patent: **15.08.2018**
(21) Application number: 15795082.5
(22) Date of filing: 30.10.2015
(51) Int. Cl.: H04W 76/28, H04W 16/14, H04W 88/06

(54) **MIXED-MODE MEDIUM ACCESS CONTROL (MAC) ON A SHARED COMMUNICATION MEDIUM**
MISCHMODUS-MEDIUMZUGRIFFSSTEUERUNG (MAC) AUF EINEM GEMEINSAMEN KOMMUNIKATIONSMEDIUM
CONTRÔLE D'ACCÈS AU SUPPORT (MAC) EN MODE MIXTE SUR UN SUPPORT DE COMMUNICATION PARTAGÉ

(30) Priority: 31.10.2014 US 201462073749 P; 14.11.2014 US 201462080170 P; 23.06.2015 US 201562183625 P; 29.10.2015 US 201514926389
(43) Date of publication of application: 16.08.2017
(73) Proprietor: Qualcomm Incorporated, San Diego, CA 92121-1714 (US)
(72) Inventor: SADEK, Ahmed Kamel, San Diego, California 92121-1714 (US); KADOUS, Tamer Adel, San Diego, California 92121-1714 (US); VALLIAPPAN, Nachiappan, San Diego, California 92121-1714 (US)
(74) Representative: Dunlop, Hugh Christopher
(86) International application number: PCT/US2015/058442
(87) International publication number: WO 2016/070114

(56) References cited:
- US-A1- 2006 165 114
- US-A1- 2012 327 850
- MIHAELA BELURI ET AL: "Mechanisms for LTE coexistence in TV white space", DYNAMIC SPECTRUM ACCESS NETWORKS (DYSPAN), 2012 IEEE INTERNATIONAL SYMPOSIUM ON, IEEE, 16 October 2012 (2012-10-16), pages 317-326, XP032342357, DOI: 10.1109/DYSPAN.2012.6478155 ISBN: 978-1-4673-4447-0

## Description

### INTRODUCTION

Aspects of this disclosure relate generally to telecommunications, and more particularly to co-existence on a shared communication medium and the like.

Wireless communication systems are widely deployed to provide various types of communication content, such as voice, data, multimedia, and so on. Typical wireless communication systems are multiple-access systems capable of supporting communication with multiple users by sharing available system resources (e.g., bandwidth, transmit power, etc.). Examples of such multiple-access systems include Code Division Multiple Access (CDMA) systems, Time Division Multiple Access (TDMA) systems, Frequency Division Multiple Access (FDMA) systems, Orthogonal Frequency Division Multiple Access (OFDMA) systems, and others. These systems are often deployed in conformity with specifications such as Long Term Evolution (LTE) provided by the Third Generation Partnership Project (3GPP), Ultra Mobile Broadband (UMB) and Evolution Data Optimized (EV-DO) provided by the Third Generation Partnership Project 2 (3GPP2), 802.11 provided by the Institute of Electrical and Electronics Engineers (IEEE), etc.

In cellular networks, "macro cell" access points provide connectivity and coverage to a large number of users over a certain geographical area. A macro network deployment is carefully planned, designed, and implemented to offer good coverage over the geographical region. To improve indoor or other specific geographic coverage, such as for residential homes and office buildings, additional "small cell," typically low-power access points have recently begun to be deployed to supplement conventional macro networks. Small cell access points may also provide incremental capacity growth, richer user experience, and so on.

Small cell LTE operations, for example, have been extended into the unlicensed frequency spectrum such as the Unlicensed National Information Infrastructure (U-NII) band used by Wireless Local Area Network (WLAN) technologies. This extension of small cell LTE operation is designed to increase spectral efficiency and hence capacity of the LTE system. However, it may also encroach on the operations of other Radio Access Technologies (RATs) that typically utilize the same unlicensed bands, most notably IEEE 802.11x WLAN technologies generally referred to as "Wi-Fi." US 2012/0327850 A1 relates to multi-radio techniques and to techniques for multi-radio devices. US 2006/0165114 A1 relates to wireless communications networks and medium reservation in multiple channel environments. *"*Mechanisms for LTE coexistence in TV white space", Mihaela Beluri et. al. 2012 IEEE International Symposium on Dynamic Spectrum Access Networks, p317-326, (DOI:10.1109/DYSPAN.2012.6478155) relates to LTE operation in license exempt bands.

### SUMMARY

The following summary is an overview provided solely to aid in the description of various aspects of the disclosure and is provided solely for illustration of the aspects and not limitation thereof.

In one example, a communication method is disclosed. The method may include, for example, cycling operation of a first Radio Access Technology (RAT) between active periods and inactive periods of transmission, on a communication medium shared with a second RAT, in accordance with a Discontinuous Transmission (DTX) communication pattern; selecting an identifier for association with the first RAT; and transmitting, over the communication medium, a channel reservation message associated with the second RAT to reserve the communication medium for one of the active periods, the channel reservation message including the identifier.

In another example, a communication apparatus is disclosed. The apparatus may include, for example, at least one processor, at least one memory coupled to the at least one processor; and a transceiver. The at least one processor and the at least one memory may be configured to cycle operation of a first RAT between active periods and inactive periods of transmission, on a communication medium shared with a second RAT, in accordance with a DTX communication pattern, and select an identifier for association with the first RAT. The transceiver may be configured to transmit, over the communication medium, a channel reservation message associated with the second RAT to reserve the communication medium for one of the active periods, the channel reservation message including the identifier.

In another example, another communication apparatus is disclosed. The apparatus may include, for example, means for cycling operation of a first RAT between active periods and inactive periods of transmission, on a communication medium shared with a second RAT, in accordance with a DTX communication pattern; means for selecting an identifier for association with the first RAT; and means for transmitting, over the communication medium, a channel reservation message associated with the second RAT to reserve the communication medium for one of the active periods, the channel reservation message including the identifier.

In another example, a transitory or non-transitory computer-readable medium is disclosed. The computer-readable medium may include, for example, code for cycling operation of a first Radio Access Technology (RAT) between active periods and inactive periods of transmission, on a communication medium shared with a second RAT, in accordance with a Discontinuous Transmission (DTX) communication pattern; code for selecting an identifier for association with the first RAT; and code for transmitting, over the communication medium, a channel reservation message associated with the second RAT to reserve the communication medium for one of the active periods, the channel reservation message including the identifier.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communication system including an access point in communication with an access terminal.
FIG. 2 is a system-level diagram illustrating contention between Radio Access Technologies (RATs) on a shared communication medium.
FIG. 3 illustrates certain aspects of an example Discontinuous Transmission (DTX) communication scheme.
FIG. 4 illustrates an example of inter-RAT coordination utilizing a channel reservation message.
FIG. 5 illustrates an example channel reservation message for inter-RAT coordination.
FIG. 6 is a timing diagram illustrating an example channel reservation message transmission scheme.
FIG. 7 is a timing diagram illustrating another example channel reservation message transmission scheme.
FIG. 8 illustrates further aspects of DTX communication coordination relating to access terminal activation and deactivation.
FIG. 9 is a flow diagram illustrating an example method of communication in accordance with the techniques described herein.
FIG. 10 is a flow diagram illustrating another example method of communication in accordance with the techniques described herein.
FIG. 11 is a flow diagram illustrating another example method of communication in accordance with the techniques described herein.
FIG. 12 illustrates an example apparatus represented as a series of interrelated functional modules.
FIG. 13 illustrates another example apparatus represented as a series of interrelated functional modules.
FIG. 14 illustrates another example apparatus represented as a series of interrelated functional modules.

### DETAILED DESCRIPTION

The present disclosure relates generally to mixed-mode Medium Access Control (MAC) for Discontinuous Transmission (DTX) on a shared communication medium. An access point implementing a DTX communication pattern on one Radio Access Technology (RAT) (e.g., LTE) may be configured to send a channel reservation message defined for another RAT (e.g., Wi-Fi) to reserve the communication medium against inter-RAT interference, but also to include in the channel reservation message an identifier associated with the first RAT to improve intra-RAT coordination and resource reuse. The DTX communication pattern may be fixed or floating. For a fixed DTX communication pattern, contention for access to the communication medium may be performed in accordance with a fixed but adaptable guard period. For a floating DTX communication pattern, contention for access to the communication medium may be performed in accordance with a dynamically variable contention period following a preceding inactive period.

More specific aspects of the disclosure are provided in the following description and related drawings directed to various examples provided for illustration purposes. Alternate aspects may be devised without departing from the scope of the disclosure. Additionally, well-known aspects of the disclosure may not be described in detail or may be omitted so as not to obscure more relevant details.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., Application Specific Integrated Circuits (ASICs)), by program instructions being executed by one or more processors, or by a combination of both. In addition, for each of the aspects described herein, the corresponding form of any such aspect may be implemented as, for example, "logic configured to" perform the described action.

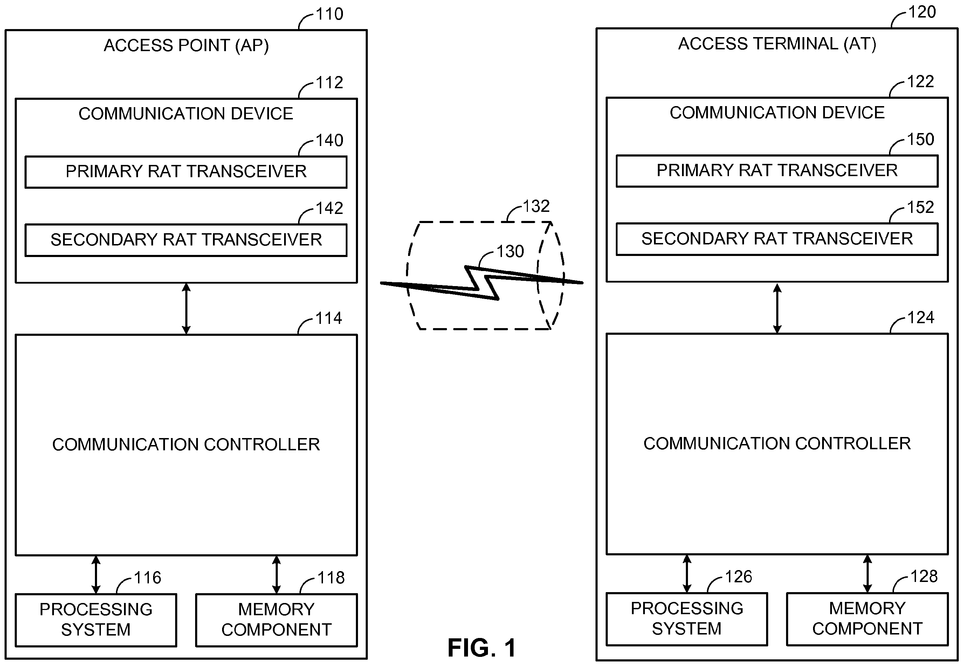

FIG. 1 illustrates an example wireless communication system including an access point in communication with an access terminal. Unless otherwise noted, the terms "access terminal" and "access point" are not intended to be specific or limited to any particular Radio Access Technology (RAT). In general, access terminals may be any wireless communication device allowing a user to communicate over a communications network (e.g., a mobile phone, router, personal computer, server, entertainment device, Internet of Things (IOT) / Internet of Everything (IOE) capable device, in-vehicle communication device, etc.), and may be alternatively referred to in different RAT environments as a User Device (UD), a Mobile Station (MS), a Subscriber Station (STA), a User Equipment (UE), etc. Similarly, an access point may operate according to one or several RATs in communicating with access terminals depending on the network in which the access point is deployed, and may be alternatively referred to as a Base Station (BS), a Network Node, a NodeB, an evolved NodeB (eNB), etc. Such an access point may correspond to a small cell access point, for example. "Small cells" generally refer to a class of low-powered access points that may include or be otherwise referred to as femto cells, pico cells, micro cells, Wireless Local Area Network (WLAN) access points, other small coverage area access points, etc. Small cells may be deployed to supplement macro cell coverage, which may cover a few blocks within a neighborhood or several square miles in a rural environment, thereby leading to improved signaling, incremental capacity growth, richer user experience, and so on.

In the example of FIG. 1, the access point 110 and the access terminal 120 each generally include a wireless communication device (represented by the communication devices 112 and 122) for communicating with other network nodes via at least one designated RAT. The communication devices 112 and 122 may be variously configured for transmitting and encoding signals (e.g., messages, indications, information, and so on), and, conversely, for receiving and decoding signals (e.g., messages, indications, information, pilots, and so on) in accordance with the designated RAT. The access point 110 and the access terminal 120 may also each generally include a communication controller (represented by the communication controllers 114 and 124) for controlling operation of their respective communication devices 112 and 122 (e.g., directing, modifying, enabling, disabling, etc.). The communication controllers 114 and 124 may operate at the direction of or otherwise in conjunction with respective host system functionality (illustrated as the processing systems 116 and 126 and the memory components 118 and 128 coupled to the processing systems 116 and 126, respectively, and configured to store data, instructions, or a combination thereof, either as on-board cache memory, separate components, a combination, etc.). In some designs, the communication controllers 114 and 124 may be partly or wholly subsumed by the respective host system functionality.

Turning to the illustrated communication in more detail, the access terminal 120 may transmit and receive messages via a wireless link 130 with the access point 110, the message including information related to various types of communication (e.g., voice, data, multimedia services, associated control signaling, etc.). The wireless link 130 may operate as part of a cell, including Primary Cells (PCells) and Secondary Cells (SCells), on respective component carriers (respective frequencies). The wireless link 130 may operate over a communication medium of interest that includes the component carriers, shown by way of example in FIG. 1 as the communication medium 132, which may be shared with other communications as well as other RATs. A medium of this type may be composed of one or more frequency, time, and/or space communication resources (e.g., encompassing one or more channels across one or more carriers) associated with communication between one or more transmitter / receiver pairs, such as the access point 110 and the access terminal 120 for the communication medium 132.

As an example, the communication medium 132 may correspond to at least a portion of an unlicensed frequency band shared with other RATs. In general, the access point 110 and the access terminal 120 may operate via the wireless link 130 according to one or more RATs depending on the network in which they are deployed. These networks may include, for example, different variants of Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, and so on. Although different licensed frequency bands have been reserved for such communications (e.g., by a government entity such as the Federal Communications Commission (FCC) in the United States), certain communication networks, in particular those employing small cell access points, have extended operation into unlicensed frequency bands such as the Unlicensed National Information Infrastructure (U-NII) band used by WLAN technologies, most notably IEEE 802.11x WLAN technologies generally referred to as "Wi-Fi."

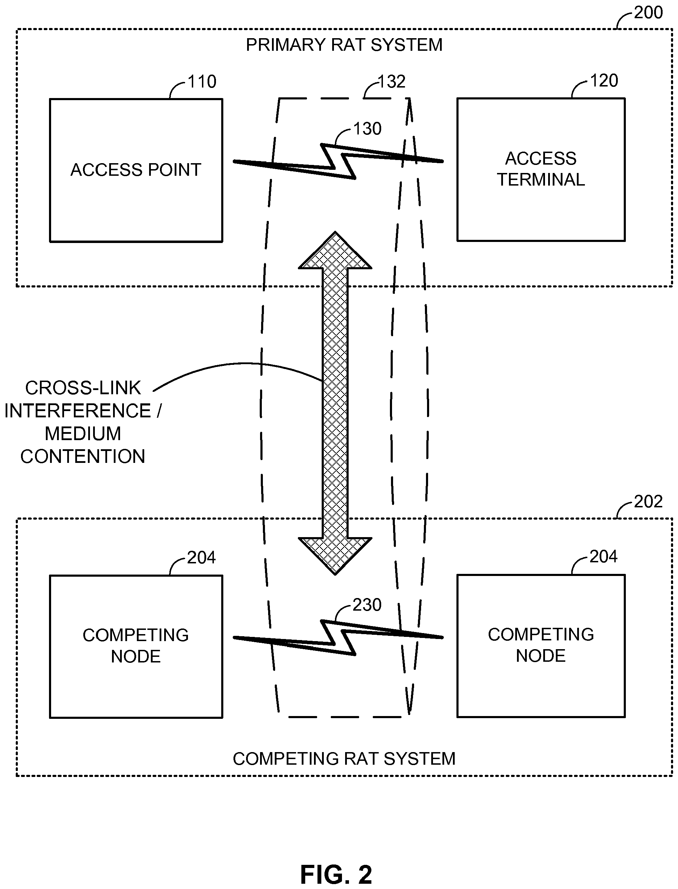

FIG. 2 is a system-level diagram illustrating contention between RATs on a shared communication medium such as the communication medium 132. In this example, the communication medium 132 is used for communication between the access point 110 and the access terminal 120 (representing at least part of a primary RAT system 200) and is shared with a competing RAT system 202. The competing RAT system 202 may include one or more competing nodes 204 that communicate with each other over a respective wireless link 230 also on the communication medium 132. As an example, the access point 110 and the access terminal 120 may communicate via the wireless link 130 in accordance with Long Term Evolution (LTE) technology, while the competing RAT system 202 may communicate via the wireless link 230 in accordance with Wi-Fi technology.

As shown, due to the shared use of the communication medium 132, there is the potential for cross-link interference between the wireless link 130 and the wireless link 230. Further, some RATs and some jurisdictions may require contention or "Listen Before Talk (LBT)" for access to the communication medium 132. As an example, the Wi-Fi IEEE 802.11 protocol family of standards provides a Carrier Sense Multiple Access / Collision Avoidance (CSMA/CA) protocol in which each Wi-Fi device verifies via medium sensing the absence of other traffic on a shared medium before seizing (and in some cases reserving) the medium for its own transmissions. As another example, the European Telecommunications Standards Institute (ETSI) mandates contention for all devices regardless of their RAT on certain communication mediums such as unlicensed frequency bands.

As described in more detail below, the access point 110 and/or the access terminal 120 may mitigate their interference to and from the competing RAT system 202 in different ways.

Returning to the example of FIG. 1, the communication device 112 of the access point 110 includes two co-located transceivers operating according to respective RATs, including a primary RAT transceiver 140 configured to operate in accordance with one RAT to predominantly communicate with the access terminal 120 and a secondary RAT transceiver 142 configured to operate in accordance with another RAT to predominantly interact with other RATs sharing the communication medium 132 such as the competing RAT system 202. As used herein, a "transceiver" may include a transmitter circuit, a receiver circuit, or a combination thereof, but need not provide both transmit and receive functionalities in all designs. For example, a low functionality receiver circuit may be employed in some designs to reduce costs when providing full communication is not necessary (e.g., a W-Fi chip or similar circuitry simply providing low-level sniffing). Further, as used herein, the term "co-located" (e.g., radios, access points, transceivers, etc.) may refer to one of various arrangements. For example, components that are in the same housing; components that are hosted by the same processor; components that are within a defined distance of one another; and/or components that are connected via an interface (e.g., an Ethernet switch) where the interface meets the latency requirements of any required inter-component communication (e.g., messaging).

The primary RAT transceiver 140 and the secondary RAT transceiver 142 may accordingly provide different functionalities and may be used for different purposes. Returning to the LTE and Wi-Fi example above, the primary RAT transceiver 140 may operate in accordance with LTE technology to provide communication with the access terminal 120 on the wireless link 130, while the secondary-RAT transceiver 142 may operate in accordance with Wi-Fi technology to monitor or control Wi-Fi signaling on the communication medium 132 that may interfere with or be interfered with by the LTE communications. The secondary RAT transceiver 142 may or may not serve as a full W-Fi access point providing communication services to an associated Basic Service Set (BSS). The communication device 122 of the access terminal 120 may, in some designs, include similar primary RAT transceiver and/or secondary RAT transceiver functionality, as shown in FIG. 1 by way of the primary RAT transceiver 150 and the secondary RAT transceiver 152, although such dual-transceiver functionality may not be required.

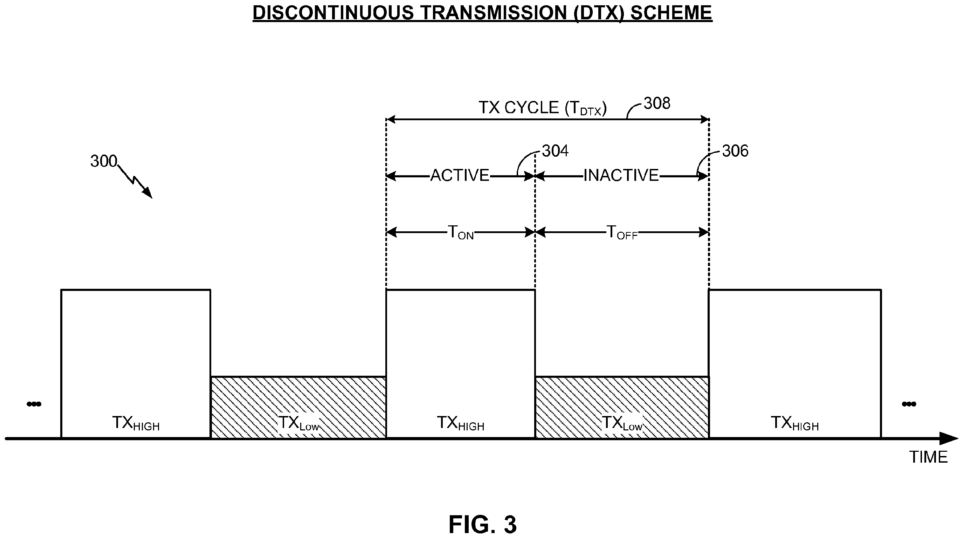

FIG. 3 illustrates certain aspects of an example Discontinuous Transmission (DTX) communication scheme that may be implemented by the primary RAT system 200 on the communication medium 132. The DTX communication scheme may be used to foster time-division-based co-existence with the competing RAT system 202. As shown, usage of the communication medium 132 for primary RAT communication may be divided into a series of active periods 304 and inactive periods 306 of communication. The relationship between the active periods 304 and the inactive periods 306 may be adapted in different ways to promote fairness between the primary RAT system 200 and the competing RAT system 202.

A given active period 304 / inactive period 306 pair may constitute a transmission (TX) cycle (T_{DTX}) 308, which collectively form a communication pattern 300. During a period of time T_{ON} associated with each active period 304, primary RAT communication on the communication medium 132 may proceed at a normal, relatively high transmission power (TX_{HIGH}). During a period of time T_{OFF} associated with each inactive period 306, however, primary RAT communication on the communication medium 132 may be disabled or at least sufficiently reduced to a relatively low transmission power (TX_{LOW}) in order to yield the communication medium 132 to the competing RAT system 202. During this time, various network listening functions and associated measurements may be performed by the access point 110 and/or the access terminal 120, such as medium utilization measurements, medium utilization assessment sensing, and so on.

The DTX communication scheme may be characterized by a set of one or more DTX parameters. Each of the associated DTX parameters, including, for example, a period duration (e.g., the length of T_{DTX}), a duty cycle (e.g., T_{ON} / T_{DTX}) and the respective transmission powers during active periods 304 and inactive periods 306 (TX_{HIGH} and TX_{LOW}, respectively), may be adapted based on the current signaling conditions on the communication medium 132 to dynamically optimize the fairness of the DTX communication scheme.

With reference again to FIG. 1, the secondary RAT transceiver 142 may be configured to monitor the communication medium 132 during the time period T_{OFF} for secondary RAT signaling, such as signaling from the competing RAT system 202, which may interfere with or be interfered with by primary RAT signaling over the communication medium 132. A utilization metric may then be determined that is associated with utilization of the communication medium 132 by the secondary RAT signaling. Based on the utilization metric, one or more of the associated parameters discussed above may be set and the primary RAT transceiver 140 may be configured to cycle between active periods 304 of communication and inactive periods 306 of communication over the communication medium 132 in accordance therewith.

As an example, if the utilization metric is high (e.g., above a threshold), one or more of the parameters may be adjusted such that usage of the communication medium 132 by the primary RAT transceiver 140 is reduced (e.g., via a decrease in the duty cycle or transmission power). Conversely, if the utilization metric is low (e.g., below a threshold), one or more of the parameters may be adjusted such that usage of the communication medium 132 by the primary RAT transceiver 140 is increased (e.g., via an increase in the duty cycle or transmission power).

To improve synchronization with the competing RAT system 202, coordination signaling may be transmitted over the communication medium 132 in furtherance of the DTX communication scheme. For example, the access point 110 (or another device implementing DTX) may send a channel reservation message defined for the secondary RAT to neighboring access points (e.g., Wi-Fi APs), neighboring access terminals (e.g., Wi-Fi STAs), etc., to reserve the communication medium 132 for primary RAT operation and prevent secondary RAT devices such as the competing nodes 204 of the competing RAT system 202 from transmitting during one or more of the active periods 304. In order to reduce the impact of this additional secondary RAT signaling on neighboring primary RAT devices that may be monitoring secondary RAT medium utilization, for example, as well as to improve so-called resource "reuse" for primary RAT operation (e.g., promote "reuse 1" among same-operator devices), the channel reservation message may be provisioned with a special identifier to distinguish it from native secondary-RAT signaling from the competing RAT system 202.

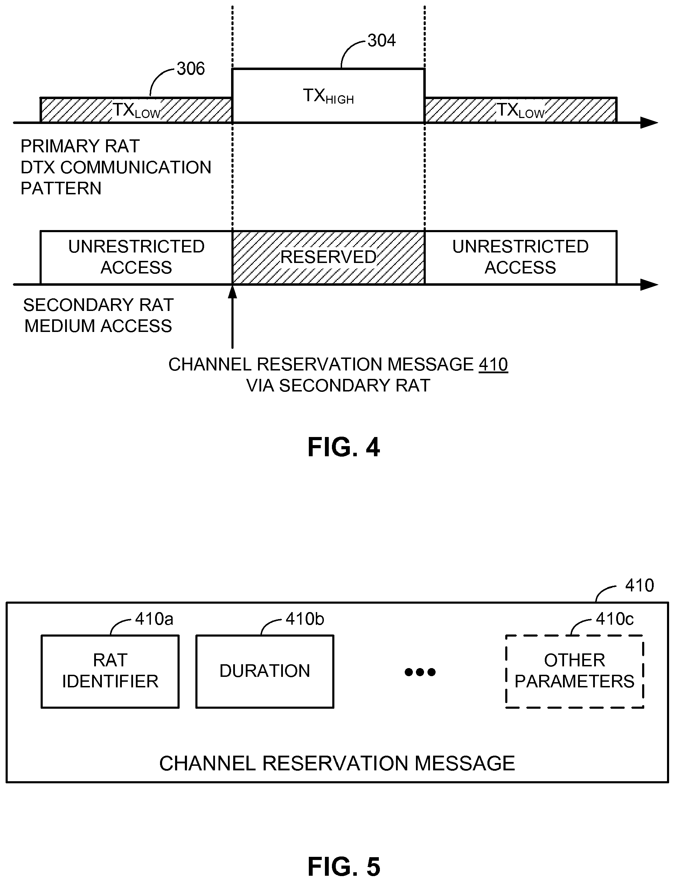

FIG. 4 illustrates an example of inter-RAT coordination utilizing a channel reservation message. As in FIG. 3, during active periods 304 of communication, primary RAT transmission on the communication medium 132 is enabled. During inactive periods 306, primary RAT transmission on the communication medium 132 is disabled to allow secondary RAT operations and to conduct measurements.

As shown, the secondary RAT transceiver 142 may be used to transmit a channel reservation message 410 on the communication medium 132 to reserve it for transmission by the primary RAT transceiver 140 or other primary RAT devices. Example channel reservation messages may include, for example, Clear-to-Send-to-Self (CTS2S) messages, Request-to-Send (RTS) messages, Clear-to-Send (CTS) messages, Physical Layer Convergence Protocol (PLCP) headers (e.g., a legacy signal (L-SIG), a high throughput signal (HT-SIG), or very high throughput signal (VHT-SIG)), and the like for a secondary Wi-Fi RAT, or other similar messages defined for other secondary RATs of interest.

The channel reservation message 410 may be transmitted at or in anticipation of the beginning of an upcoming active period 304 to reserve the communication medium 132 from the perspective of the secondary RAT during that active period 304. When appropriate, the channel reservation message 410 may include a duration indication or the like corresponding to the duration of the upcoming active period 304 (e.g., a Network Allocation Vector (NAV)). The transmission power of the channel reservation message 410 may also be adapted to control its range, as desired (and, hence, the number of affected devices). The transmission of the channel reservation message 410 may also be subject to the nature (e.g., type) of secondary RAT operating channel overlapping the communication medium 132. For example, the channel reservation message 410 may not be sent if the communication medium 132 corresponds to a secondary channel for neighboring Wi-Fi devices. This is because a Wi-Fi STA is not required to set its NAV for 20MHz frames sent on a secondary channel in certain versions of the IEEE 802.11 protocol family. By utilizing a channel reservation mechanism built into the secondary RAT itself, greater protection may be obtained for primary RAT communication during the active period 304 as compared to relying on other, less-sensitive channel sensing mechanisms geared towards inter-RAT traffic (e.g., a less-deferential Wi-Fi Clear Channel Assessment (CCA) Energy Detection (ED) mechanism that may be otherwise used by the competing RAT system 202 to assess the state of the communication medium 132 prior to attempting transmission).

In addition, the channel reservation message 410 may include an identifier associated with the primary RAT to alert other devices operating in accordance with the primary RAT about the nature of the channel reservation message 410. Example identifiers may include new special-purpose identifiers or preexisting, repurposed identifiers selected to convey primary RAT operation. By utilizing such an identifier in conjunction with the channel reservation mechanism, a "mixed-mode" Medium Access Control (MAC) scheme may be employed that takes advantage of the MAC procedures provided by both RATs without one interfering with the other (e.g., without a Wi-Fi MAC procedure causing an LTE MAC procedure to restrict medium access based on what may incorrectly be perceived as Wi-Fi medium utilization).

FIG. 5 illustrates an example channel reservation message for inter-RAT coordination. In this example, the channel reservation message 410 includes a RAT identifier field 410a, a duration field 410b, and optionally other parameters 410c as required for any given implementation. As discussed above, the duration field 410b may be set to indicate the duration of an upcoming active period 304. The other parameters 410c may include fields related to receiver / transmitter addressing, error correction, etc. For example, the other parameters 410c may include a frame control field, a receiver address field, and a frame check sequence field for a CTS or CTS2S channel reservation message.

The RAT identifier field 410a may be implemented in various ways and in various parts of the channel reservation message 410, including as or part of a header portion (e.g., a MAC header or a PHY header), as or part of a standalone Information Element (IE), and so on. In some designs, the RAT identifier field 410a may be a special-purpose identifier added to the channel reservation message 410 and used exclusively for RAT identification. In other designs, the RAT identifier field 410a may be carved out of a previously unused or reserved set of bits. In still other designs, the RAT identifier field 410a may correspond to a preexisting identifier that is repurposed by way of a predetermined value.

As an example, a particular value of a network identifier such as a Basic Service Set Identifier (BSSID) may be used as the RAT identifier to indicate that the channel reservation message 410 is being transmitted in association with operation of a corresponding RAT other than the native secondary RAT whose signaling protocol is used to transmit the channel reservation message 410. As another example, a particular value of a Receiver Address (RA) may be used as the RAT identifier (e.g., in the RA field of a Wi-Fi CTS frame conventionally used to define the MAC ID of the Network Interface Card (NIC)).

As another example, a particular range of duration values may be used as the RAT identifier. In some designs, the range may be distinguished by a threshold value that would be atypical of native secondary RAT operation. For example, the typical duration values indicated by Wi-Fi CTS packets are limited by the length of typical Wi-Fi packets (e.g., less than or equal to 5.484ms, the maximum transmission opportunity (TxOP) length). Accordingly, any detected duration value above a corresponding duration threshold (e.g., greater than 15ms) may be understood to indicate that the channel reservation message 410 is being transmitted in association with operation of a corresponding RAT other than Wi-Fi.

As another example, a particular value of a scrambler seed in a PHY header may be used as the RAT identifier. The Service field of a Wi-Fi PLCP header, for example, includes scrambler initialization bits originally intended to be used to set the initial state of the descrambler at the receiver that may instead be repurposed to serve as the RAT identifier. As another example, a particular value of a user identifier in a PHY header may be used as the identifier. The Partial Association Identifier (PAID) field of a Wi-Fi PLCP header (defined for Very High Throughput (VHT) packets in the VHT-SIG-A region), for example, originally intended to provide an indication to Wi-Fi STAs of whether or not the packet is intended for the STA may instead be repurposed to serve as the RAT identifier, at least for secondary RAT devices capable of understanding such a header.

Use of PHY header fields such as a scrambler seed or user identifier may provide advantages over other fields that require further processing to decode, including MAC header fields such as BSSID. For example, it may be advantageous from a latency perspective to decode and identify the source of a channel reservation message (primary RAT or secondary RAT device) by only looking at the PLCP header without having to decode the entire packet, perform an error check, and read the BSSID field. It may also be advantageous to be able to appear as a random secondary RAT device with a different BSSID for every channel reservation (e.g., to prevent secondary RAT devices from identifying and countering channel reservation from primary RAT devices), as well as to retain use of the BSSID field to communicate other information among primary RAT devices.

Returning to the example design of FIG. 5, based on the RAT identifier (e.g., the RAT identifier field 410a) associating the channel reservation message 410 with primary RAT operation, other primary RAT devices may exclude the channel reservation message 410 from any related MAC operations predicated on secondary RAT signaling. For example, LTE devices receiving a Wi-Fi CTS2S message having a selected RA associated with LTE operation may exclude this CTS2S message from their Wi-Fi medium utilization calculations for the purposes of setting DTX parameters. In this way, those calculations can be prevented from being corrupted by secondary RAT coordination signaling that is not truly reflective of secondary RAT operations. Further, LTE devices receiving a Wi-Fi CTS2S message having a selected RA associated with LTE operation may exclude the process of setting their Network Allocation Vector (NAV) based on this CTS2S message (thereby better facilitating "reuse 1") and instead continue to contend for access to the communication medium 132 for their own active period 304 (e.g., by sending their own channel reservation message 410). By contrast, any device unaware of this RAT identifier would normally set their NAV and defer access to the communication medium 132 until the channel reservation expires. This allows the mixed-mode MAC scheme to operate more harmoniously and more efficiently, retaining the advantages of each (e.g., the tight resource reuse provided by LTE and the DTX medium sharing predicated on Wi-Fi signaling).

The RAT identifier may be coordinated among neighboring devices in various ways. For example, the RAT identifier may be set by a given operator and provided via backhaul signaling, such as in the form of an Operation & Maintenance (O&M) parameter in the configuration file of the access point 110. As another example, the RAT identifier may be calculated (e.g., as a hash function) based on a common network identifier, such as the operator ID (e.g., a Public Land Mobile Network (PLMN) ID).

Returning again to FIG. 4, although channel reservation is shown for illustration purposes as commencing at the DTX cycle boundary, it may be desirable to transmit the channel reservation message 410 early, in advance of the target active period 304, to better ensure that channel reservation is successful. The earlier the communication medium 132 is reserved, the less likely it is that one of the competing nodes 204 of the competing RAT system 202 will have already reserved the communication medium 132 for itself during the target active period 304. At the same time, however, for at least those channel reservation messages that take effect immediately (e.g., CTS2S) and do not provide for a future reservation start time, early reservation may unduly encumber the communication medium 132 and prevent the competing RAT system 202 from utilizing it even when the access point 110 is not transmitting primary RAT signaling (e.g., during a portion of the inactive period 306 leading up to the target active period 304).

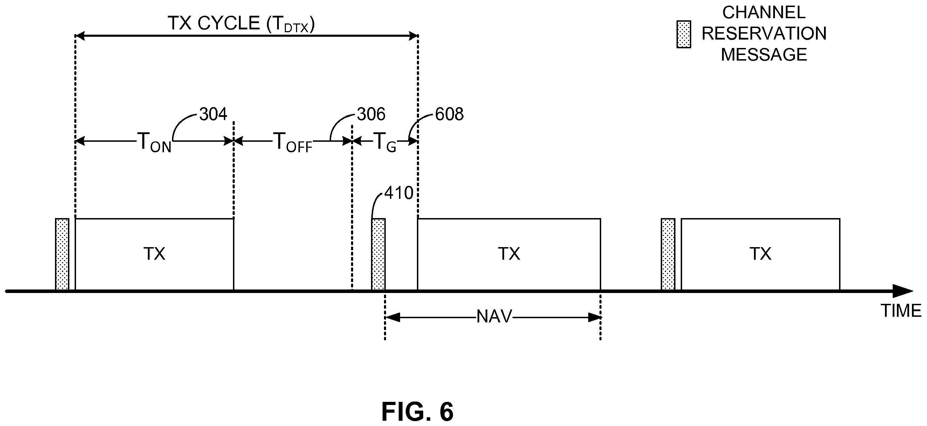

FIG. 6 is a timing diagram illustrating an example channel reservation message transmission scheme. As in FIG. 3, during active periods 304 of communication, primary RAT transmission on the communication medium 132 is enabled. During inactive periods 306, primary RAT transmission on the communication medium 132 is disabled to allow secondary RAT operations and to conduct measurements.

In this example, the channel reservation message 410 is transmitted during a guard period (T_{G}) 608 within the inactive period 306 preceding the target active period 304. The guard period 608 may be established as a medium contention period in which the access point 110 may contend for access to the communication medium 132 for a time period encompassing the target active period 304. The channel reservation message 410 may be sent at any opportune time during the guard period 608. For example, the channel reservation message 410 may be sent immediately upon commencement of the guard period 608. If the reservation is unsuccessful because the communication medium 132 is occupied by secondary RAT signaling at the beginning of the guard period 608, the channel reservation message 410 may be resent after the communication medium 132 becomes free.

In some designs, it may be determined ahead of time that the communication medium 132 will be occupied by secondary RAT signaling at the beginning of the guard period 608 and the channel reservation message 410 may be held for transmission until after the communication medium 132 becomes free. For example, the access point 110 may monitor the communication medium 132 during all or part of the preceding inactive period 306 leading up to the guard period 608 for traffic that will extend into the guard period 608. In this way, medium contention may be effectively extended such that the access point 110 will know whether the communication medium 132 is free or busy before sending its first channel reservation message 410.

The duration indication included in the channel reservation message 410 (e.g., the duration field of a CTS2S message) may be set based on the remainder of the guard period 608 at the time of transmission and the length of the upcoming active period 304. As is further illustrated in FIG. 6, the reservation may prompt one or more of the competing nodes 204 of the competing RAT system 202 to refrain from attempting access to the communication medium 132 during that time (e.g., by setting their NAV based on the CTS2S duration field).

The guard period 608 may be set statically or may be dynamically adapted as a tradeoff between the probability of reservation success and the additional overhead time for which the competing RAT system 202 is prevented from utilizing the communication medium 132. For example, the guard period 608 may be adapted based on reservation success rate statistics, historical packet characteristics relating to secondary RAT traffic, advertised packet characteristics relating to secondary RAT traffic, and so on.

As an example, the access point 110 may monitor its CTS2S success statistics (e.g., via the secondary RAT transceiver 142) and the guard period 608 may be adapted to meet a target success rate threshold. If the monitored success rate is below the target success rate threshold, the guard period 608 may be expanded to ensure that the target success rate threshold is met. If the monitored success rate is above the target success rate threshold, the guard period 608 may be condensed to reduce the additional overhead time for which the competing RAT system 202 is prevented from utilizing the communication medium 132, while still safely meeting the target success rate threshold. The target success rate threshold itself may be set based on the desired level of protection to be afforded to the competing RAT system 202.

As another example, the access point 110 may monitor TxOP size for secondary RAT traffic (e.g. via the secondary RAT transceiver 142) and the guard period 608 may be adapted to encompass the TxOP size or a statistic thereof (e.g., average TxOP size, upper quartile of TxOP size, etc.). TxOP size may be monitored from beacon signal advertisements as well as observed traffic. By mapping the guard period 608 to encompass the secondary RAT TxOP size, the access point 110 may better ensure that there will be an opportunity for channel reservation at some point within the guard period 608.

Returning to FIG. 6, the use of the guard period 608 may introduce additional processing overhead into the inactive period 306. For example, CTS2S is always sent on a primary Wi-Fi channel, which can be different from the channel being shared on the communication medium 132 and subject to cross-link interference (e.g., if an LTE device, for example, is using a Wi-Fi secondary channel). The overhead to retune the secondary RAT transceiver 142 (e.g., Wi-Fi radio firmware) from listening on one channel for medium utilization measurements and another channel for CTS2S exchanges during contention may accordingly be quantified and captured as part of the inactive period 306 calculations.

In some designs, it may be advantageous for the start of each active period 304 to be made floating rather than fixed. This may help foster co-existence, for example, by better accommodating completion of secondary RAT traffic associated with the competing RAT system 202. The channel reservation message 410 for the next active period 304 may therefore be sent at a subsequent time following the preceding inactive period 306, rather than in accordance with a fixed time such as that defined by the guard period 608.

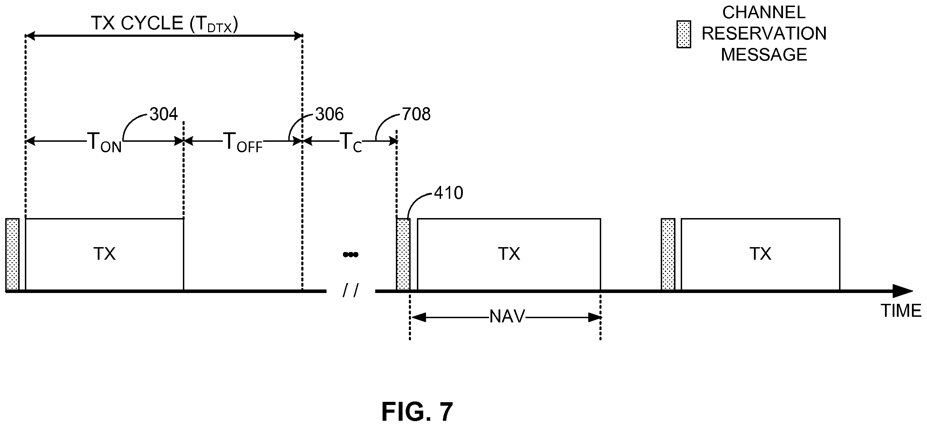

FIG. 7 is a timing diagram illustrating another example channel reservation message transmission scheme. Again as in FIG. 3 and FIG. 6, during active periods 304 of communication, primary RAT transmission on the communication medium 132 is enabled. During inactive periods 306, primary RAT transmission on the communication medium 132 is disabled to allow secondary RAT operations and to conduct measurements.

In this example, rather than limiting contention to a fixed albeit (long-term) adaptable time like the guard period 608, the access point 110 may contend for access to the communication medium 132 for a variable-length contention period (T_{C}) 708 before commencing the next active period 304. When appropriate (e.g., in response to a triggering condition), the access point 110 may transmit the channel reservation message 410 at the conclusion of the contention period 708 to protect the next active period 304.

The contention process may take into account both primary RAT signaling (e.g., LBT energy detection or the like) and secondary RAT signaling (e.g., channel reservation). For example, the access point 110 may monitor (e.g., via the primary RAT transceiver 140 and/or the secondary RAT transceiver 142) the communication medium 132 during the contention period 708 for signaling energy (e.g., Received Signal Strength Indicator (RSSI)) in relation to a backoff threshold (e.g., LBT or CCA-ED threshold). Meanwhile, the access point 110 may also monitor (e.g., via the secondary RAT transceiver 142) the communication medium 132 during the contention period 708 for secondary RAT signaling that may be decoded to look for channel reservation by the competing RAT system 202 or by other primary RAT devices whose reservations are to be respected (e.g., other-operator devices). When the signaling energy is below the backoff threshold and no channel reservation is detected, the next active period 204 may be initiated. Otherwise, the next active period 204 may be delayed (e.g., for a backoff period, after which the contention procedure is repeated).

In some situations, the channel reservation message 410 may be omitted to limit potential interference to the communication medium 132. In other situations, however, such as when a triggering condition is met, the channel reservation message 410 may be transmitted at the conclusion of the contention period 708 to protect the next active period 304. The triggering condition may be set in different ways to protect different classes of transmission. For example, the triggering condition may take into account poor primary RAT performance, the impact on secondary RAT performance, hidden secondary RAT nodes, and so on. Primary RAT performance may be characterized, for example, by downlink Block Error Rate (BLER) and Channel Quality Indicator (CQI) feedback from the access terminal 120 or another access terminal. The impact on secondary RAT performance may be characterized, for example, by assessing the effect of the channel reservation message 410 on the competing RAT system 202 (e.g., as a function of the Signal-to-Noise Ratio (SNR) and Signal-to-Interference-plus-Noise Ratio (SINR) on the secondary RAT downlink (DL), such as SNR_{DL} / (α SINR_{DL} + (1-α)SNR_{DL}), where α is weighting parameter). Hidden secondary RAT nodes may be detected, for example, by classifying observed traffic by frame type using its payload (e.g., data vs. acknowledgement (ACK)) and looking for transmitter / receiver pairs.

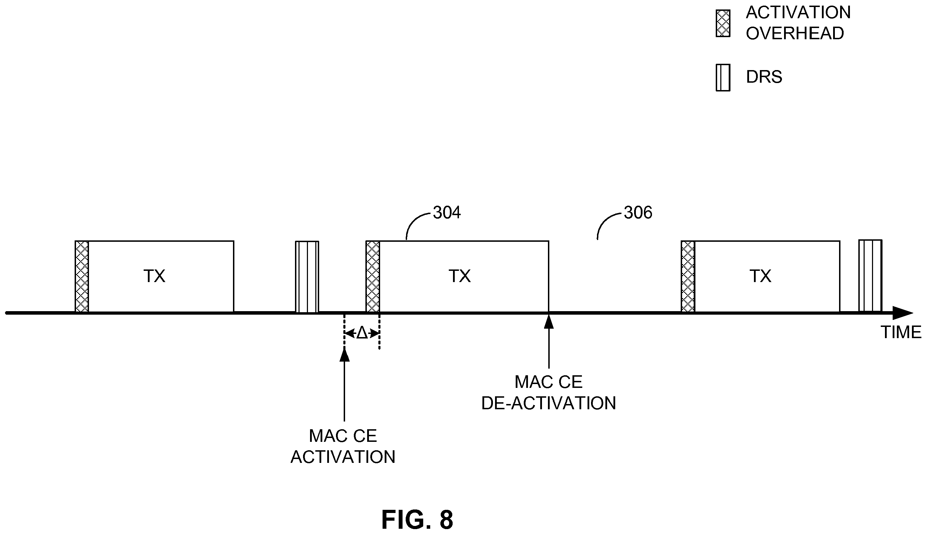

FIG. 8 illustrates further aspects of DTX communication coordination relating to access terminal activation and deactivation. As in FIG. 3, during active periods 304 of communication, primary RAT transmission on the communication medium 132 is enabled. During inactive periods 306, primary RAT transmission on the communication medium 132 is disabled to allow secondary RAT operations and to conduct measurements.

As shown, in some designs, a MAC Control Element (CE) activation command for the access terminal 120 for a given active period 304 may be sent early in accordance with an activation margin, such as a few milliseconds before the start of the active period (e.g. 1-3 msec). This may help to provide a buffer against the processing delay required for the access terminal 120 to decode the MAC CE. The activation margin may be fixed for all access terminals or adaptive on an individual access terminal basis.

In addition, however, the access terminal 120 may need to perform one or more ramp-up procedures to be ready at or near the start time for the active period 304. The ramp-up procedures may be used to set Automatic Gain Control (AGC), firmware, etc., which may need to be adjusted based on changes in the operating system or environment during the preceding inactive period 306.

According to the techniques herein, the access terminal 120 may be required to perform the ramp-up procedures in accordance with a duration of the preceding inactive period 306 of the DTX communication pattern 300. In particular, the access terminal 120 may be required to perform ramp-up faster for relatively short inactive periods 306 (e.g., by monitoring a Demodulation Reference Signal (DRS) in the preceding inactive period 306 and using it for channel estimation), where the operating system and environment are likely to have changed very little (as compared to other inactive periods). For example, if the duration of the preceding inactive period 306 is less than a threshold (e.g., on the order of a few tens of milliseconds, such as 10 or 20 ms), the access terminal 120 may be expected to be ready (e.g., to decode its Physical Downlink Control Channel (PDCCH)) in a relatively short amount of time (e.g., on the order of 2 ms).

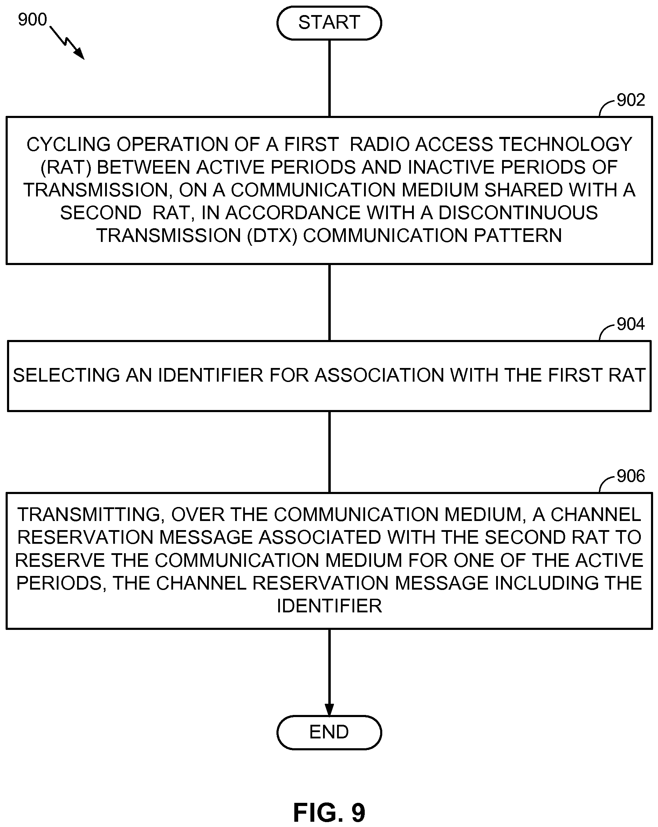

FIG. 9 is a flow diagram illustrating an example method of communication in accordance with the techniques described above. The method 900 may be performed, for example, by an access point (e.g., the access point 110 illustrated in FIG. 1) operating on a shared communication medium. As an example, the communication medium may include one or more time, frequency, or space resources on an unlicensed radio frequency band shared between LTE technology and Wi-Fi technology devices.

As shown, the access point may cycle operation of a first RAT between active periods and inactive periods of transmission, on a communication medium shared with a second RAT, in accordance with a DTX communication pattern (block 902). The cycling may be performed, for example, by a processor and memory such as the processing system 116 and memory component 118 or the like. The access point may select an identifier for association with the first RAT (block 904). The selecting may be performed, for example, by a processor and memory such as the processing system 116 and memory component 118 or the like. The access point may then transmit, over the communication medium, a channel reservation message associated with the second RAT to reserve the communication medium for one of the active periods, the channel reservation message including the identifier (block 906). The transmitting may be performed, for example, by a transceiver such as the secondary RAT transceiver 142 or the like.

As discussed in more detail above, the channel reservation message may include, for example, at least one of a CTS2S message, a RTS message, a CTS message, a PLCP header defined by the second RAT, or a combination thereof. The identifier may include, for example, a BSSID selected to indicate first RAT operation, a RA selected to indicate first RAT operation, a range of duration values selected to indicate first RAT operation, a duration threshold selected to indicate first RAT operation, a PHY header scrambler seed selected to indicate first RAT operation, a PHY header user identifier selected to indicate first RAT operation, or a combination thereof.

The identifier may be coordinated among at least two access points. As an example, the access point may determine the identifier from backhaul signaling, from an operator identifier, or from a combination thereof.

At some time, the access point may receive a second channel reservation message, identify the second channel reservation message as including the identifier, and exclude, based on the identifying, the second channel reservation message from (i) one or more medium access control calculations, (ii) one or more Network Allocation Vector (NAV) settings associated with the second RAT, or (iii) a combination thereof

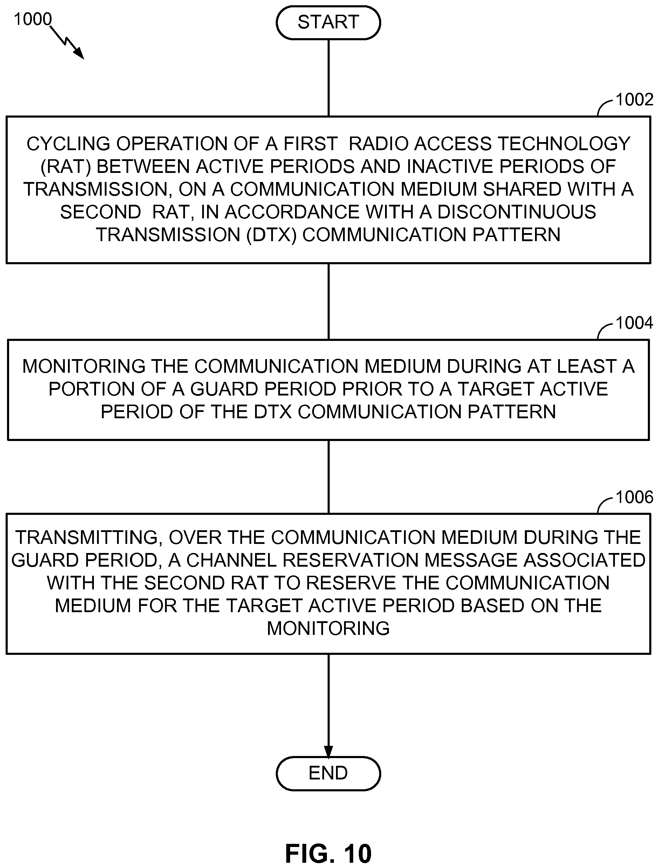

FIG. 10 is a flow diagram illustrating another example method of communication in accordance with the techniques described above. The method 1000 may be performed, for example, by an access point (e.g., the access point 110 illustrated in FIG. 1) operating on a shared communication medium. As an example, the communication medium may include one or more time, frequency, or space resources on an unlicensed radio frequency band shared between LTE technology and Wi-Fi technology devices.

As shown, the access point may cycle operation of a first RAT between active periods and inactive periods of transmission, on a communication medium shared with a second RAT, in accordance with a DTX communication pattern (block 1002). The cycling may be performed, for example, by a processor and memory such as the processing system 116 and memory component 118 or the like. The access point may monitor the communication medium during at least a portion of a guard period prior to a target active period of the DTX communication pattern (block 1004). The monitoring may be performed, for example, by a processor and memory such as the processing system 116 and memory component 118 or the like. The access point may then transmit, over the communication medium during the guard period, a channel reservation message associated with the second RAT to reserve the communication medium for the target active period based on the monitoring (block 1006). The transmitting may be performed, for example, by a transceiver such as the secondary RAT transceiver 142 or the like.

As discussed in more detail above, the channel reservation message may include, for example, at least one of a CTS2S message defined by the second RAT, a RTS message defined by the second RAT, a CTS message defined by the second RAT, a PLCP header defined by the second RAT, or a combination thereof.

In some instances, the access point may retransmit the channel reservation message during the guard period if channel reservation is unsuccessful. The access point may also determine, prior to the guard period, that the communication medium will be occupied by second RAT traffic at commencement of the guard period, and queue the channel reservation message for transmission at a later time within the guard period after the commencement.

In some designs, the access point may adapt a duration of the guard period based on at least one of reservation success rate statistics, historical packet characteristics relating to second RAT traffic, broadcasted packet characteristics relating to second RAT traffic, or a combination thereof. As an example, the duration of the guard period may be adapted based on the reservation success rate statistics and a target success rate threshold. As another example, the duration of the guard period may be adapted based on an observed or broadcasted TxOP size associated with second RAT traffic.

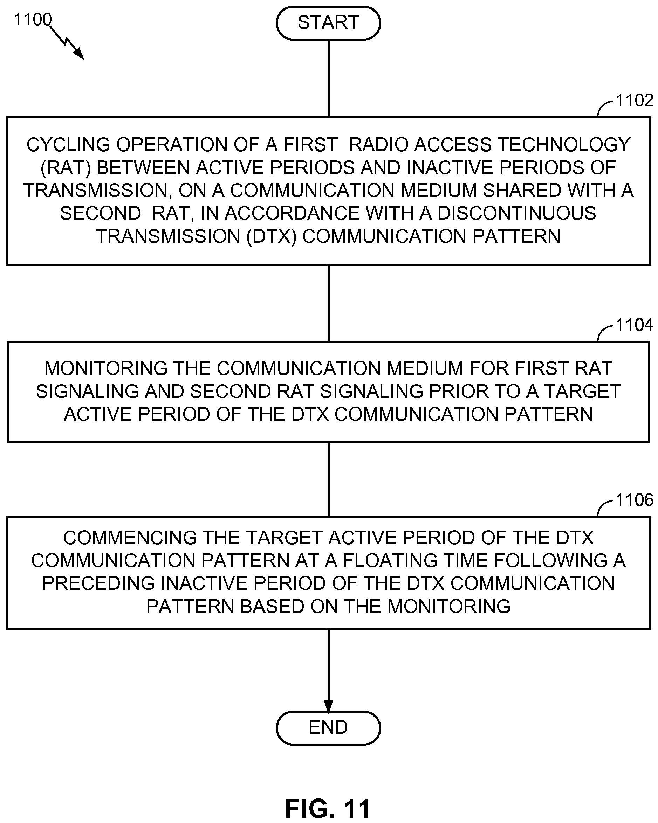

FIG. 11 is a flow diagram illustrating another example method of communication in accordance with the techniques described above. The method 1100 may be performed, for example, by an access point (e.g., the access point 110 illustrated in FIG. 1) operating on a shared communication medium. As an example, the communication medium may include one or more time, frequency, or space resources on an unlicensed radio frequency band shared between LTE technology and Wi-Fi technology devices.

As shown, the access point may cycle operation of a first RAT between active periods and inactive periods of transmission, on a communication medium shared with a second RAT, in accordance with a DTX communication pattern (block 1102). The cycling may be performed, for example, by a processor and memory such as the processing system 116 and memory component 118 or the like. The access point may monitor the communication medium for first RAT signaling and second RAT signaling prior to a target active period of the DTX communication pattern (block 1104). The monitoring may be performed, for example, by a processor and memory such as the processing system 116 and memory component 118 or the like. The access point may then commence the target active period of the DTX communication pattern at a floating time following a preceding inactive period of the DTX communication pattern based on the monitoring (block 1106). The commencing may be performed, for example, by a processor and memory such as the processing system 116 and memory component 118 or the like.

As an example, the monitoring (block 1104) may include measuring a signaling energy on the communication medium and the commencing (block 1106) may include delaying the target active period in relation to the preceding inactive period in response to the signaling energy exceeding a threshold. As another example, the monitoring (block 1104) may include decoding the first RAT signaling, the second RAT signaling, or both, and the commencing (block 1106) may include delaying the target active period in relation to the preceding inactive period in response to the decoded signaling indicating a channel reservation.

In some designs, the access point may transmit, over the communication medium, a channel reservation message associated with the second RAT to reserve the communication medium for the target active period based on a triggering condition. As discussed in more detail above, the channel reservation message may include, for example, at least one of a CTS2S message defined by the second RAT, a RTS message defined by the second RAT, a CTS message defined by the second RAT, a PLCP header defined by the second RAT, or a combination thereof. The triggering condition may include, for example, a degradation of first RAT signaling, a degradation of second RAT signaling, a detection of one or more hidden second RAT nodes, or a combination thereof.

For convenience, the access point 110 and the access terminal 120 are shown in FIG. 1 as including various components that may be configured according to the various examples described herein. It will be appreciated, however, that the illustrated blocks may be implemented in various ways. In some implementations, the components of FIG. 1 may be implemented in one or more circuits such as, for example, one or more processors and/or one or more ASICs (which may include one or more processors). Here, each circuit may use and/or incorporate at least one memory component for storing information or executable code used by the circuit to provide this functionality.

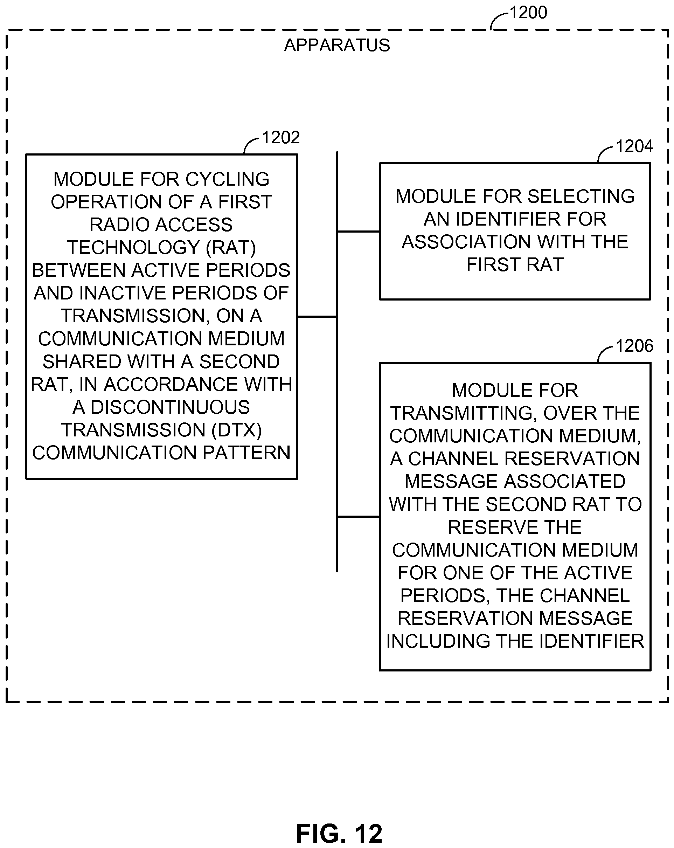

FIGS. 12-14 provide alternative illustrations of apparatuses for implementing the access point 110 and/or the access terminal 120 represented as a series of interrelated functional modules.

FIG. 12 illustrates an example apparatus 1200 represented as a series of interrelated functional modules. A module for cycling 1202 may correspond at least in some aspects to, for example, a communication controller or a component thereof as discussed herein (e.g., the communication controller 104 or the like). A module for selecting 1204 may correspond at least in some aspects to, for example, a communication controller or a component thereof as discussed herein (e.g., the communication controller 104 or the like). A module for transmitting 1206 may correspond at least in some aspects to, for example, a communication device or a component thereof as discussed herein (e.g., the communication device 112 or the like).

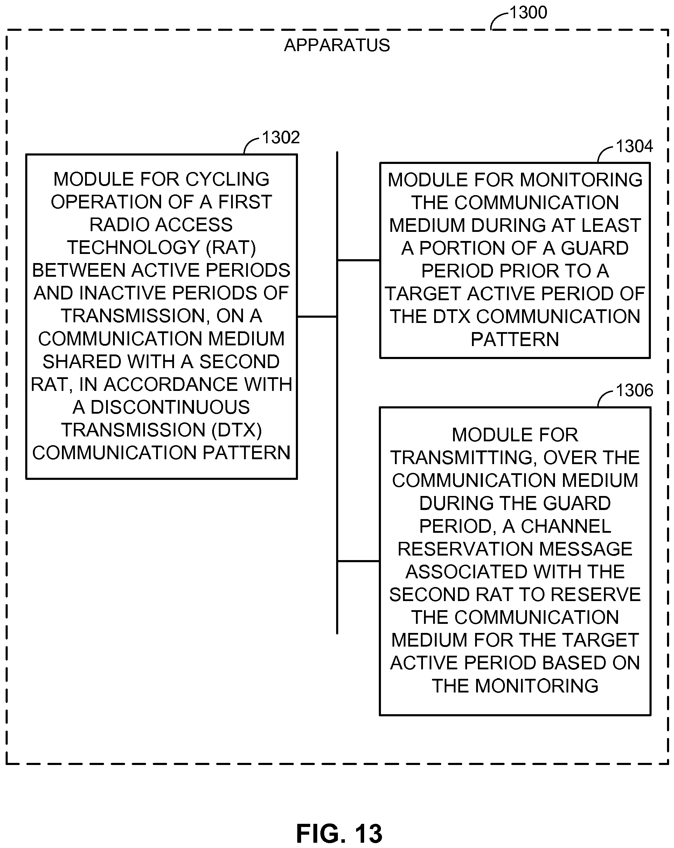

FIG. 13 illustrates another example apparatus 1300 represented as a series of interrelated functional modules. A module for cycling 1302 may correspond at least in some aspects to, for example, a communication controller or a component thereof as discussed herein (e.g., the communication controller 104 or the like). A module for monitoring 1304 may correspond at least in some aspects to, for example, a communication controller or a component thereof as discussed herein (e.g., the communication controller 104 or the like). A module for transmitting 1306 may correspond at least in some aspects to, for example, a communication device or a component thereof as discussed herein (e.g., the communication device 112 or the like).

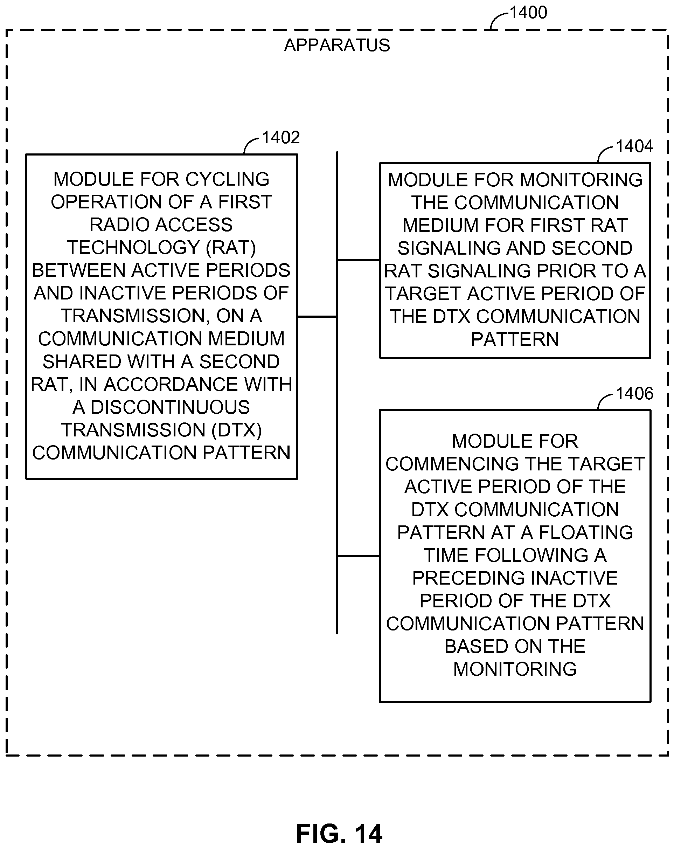

FIG. 14 illustrates another example apparatus 1400 represented as a series of interrelated functional modules. A module for cycling 1402 may correspond at least in some aspects to, for example, a communication controller or a component thereof as discussed herein (e.g., the communication controller 104 or the like). A module for monitoring 1404 may correspond at least in some aspects to, for example, a communication controller or a component thereof as discussed herein (e.g., the communication controller 104 or the like). A module for commencing 1406 may correspond at least in some aspects to, for example, a communication controller or a component thereof as discussed herein (e.g., the communication controller 104 or the like).

The functionality of the modules of FIGS. 12-14 may be implemented in various ways consistent with the teachings herein. In some designs, the functionality of these modules may be implemented as one or more electrical components. In some designs, the functionality of these blocks may be implemented as a processing system including one or more processor components. In some designs, the functionality of these modules may be implemented using, for example, at least a portion of one or more integrated circuits (e.g., an ASIC). As discussed herein, an integrated circuit may include a processor, software, other related components, or some combination thereof. Thus, the functionality of different modules may be implemented, for example, as different subsets of an integrated circuit, as different subsets of a set of software modules, or a combination thereof. Also, it will be appreciated that a given subset (e.g., of an integrated circuit and/or of a set of software modules) may provide at least a portion of the functionality for more than one module.

In addition, the components and functions represented by FIGS. 12-14, as well as other components and functions described herein, may be implemented using any suitable means. Such means also may be implemented, at least in part, using corresponding structure as taught herein. For example, the components described above in conjunction with the "module for" components of FIGS. 12-14 also may correspond to similarly designated "means for" functionality. Thus, in some aspects one or more of such means may be implemented using one or more of processor components, integrated circuits, or other suitable structure as taught herein.

It should be understood that any reference to an element herein using a designation such as "first," "second," and so forth does not generally limit the quantity or order of those elements. Rather, these designations may be used herein as a convenient method of distinguishing between two or more elements or instances of an element. Thus, a reference to first and second elements does not mean that only two elements may be employed there or that the first element must precede the second element in some manner. Also, unless stated otherwise a set of elements may comprise one or more elements. In addition, terminology of the form "at least one of A, B, or C" or "one or more of A, B, or C" or "at least one of the group consisting of A, B, and C" used in the description or the claims means "A or B or C or any combination of these elements." For example, this terminology may include A, or B, or C, or A and B, or A and C, or A and B and C, or 2A, or 2B, or 2C, and so on.

In view of the descriptions and explanations above, one skilled in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

Accordingly, it will be appreciated, for example, that an apparatus or any component of an apparatus may be configured to (or made operable to or adapted to) provide functionality as taught herein. This may be achieved, for example: by manufacturing (e.g., fabricating) the apparatus or component so that it will provide the functionality; by programming the apparatus or component so that it will provide the functionality; or through the use of some other suitable implementation technique. As one example, an integrated circuit may be fabricated to provide the requisite functionality. As another example, an integrated circuit may be fabricated to support the requisite functionality and then configured (e.g., via programming) to provide the requisite functionality. As yet another example, a processor circuit may execute code to provide the requisite functionality.

Moreover, the methods, sequences, and/or algorithms described in connection with the aspects disclosed herein may be embodied directly in hardware, in a software module executed by a processor, or in a combination of the two. A software module may reside in Random-Access Memory (RAM), flash memory, Read-only Memory (ROM), Erasable Programmable Read-only Memory (EPROM), Electrically Erasable Programmable Read-only Memory (EEPROM), registers, hard disk, a removable disk, a CD-ROM, or any other form of storage medium known in the art, transitory or non-transitory. An exemplary storage medium is coupled to the processor such that the processor can read information from, and write information to, the storage medium. In the alternative, the storage medium may be integral to the processor (e.g., cache memory).

Accordingly, it will also be appreciated, for example, that certain aspects of the disclosure can include a transitory or non-transitory computer-readable medium embodying a method for communication.

While the foregoing disclosure shows various illustrative aspects, it should be noted that various changes and modifications may be made to the illustrated examples without departing from the scope defined by the appended claims. The present disclosure is not intended to be limited to the specifically illustrated examples alone. For example, unless otherwise noted, the functions, steps, and/or actions of the method claims in accordance with the aspects of the disclosure described herein need not be performed in any particular order. Furthermore, although certain aspects may be described or claimed in the singular, the plural is contemplated unless limitation to the singular is explicitly stated.

## Claims

1. A communication method, comprising:
cycling operation (902) of a first Radio Access Technology, RAT, between active periods (304) and inactive periods (306) of transmission, on a communication medium (132) shared with a second RAT, in accordance with a Discontinuous Transmission, DTX, communication pattern, **characterized by**:
selecting (904) an identifier indicating first RAT operation; and
transmitting (906), over the communication medium (132), a channel reservation message (410) associated with the second RAT to reserve the communication medium (132) for one of the active periods (304) of the first RAT, the channel reservation message (410) including the identifier.

2. The method of claim 1, the channel reservation message comprising at least one of a Clear-to-Send-to-Self, CTS2S, message defined by the second RAT, a Request-to-Send, RTS, message defined by the second RAT, a Clear-to-Send, CTS, message defined by the second RAT, a Physical Layer Convergence Protocol, PLCP, header defined by the second RAT, or a combination thereof.

3. The method of claim 1, the identifier comprising a Basic Service Set Identifier, BSSID, selected to indicate first RAT operation, a Receiver Address, RA, selected to indicate first RAT operation, a range of duration values selected to indicate first RAT operation, a duration threshold selected to indicate first RAT operation, a Physical, PHY, header scrambler seed selected to indicate first RAT operation, a PHY header user identifier selected to indicate first RAT operation, or a combination thereof.

4. The method of claim 1, the identifier being coordinated among at least two access points.

5. The method of claim 4, further comprising:
determining the identifier from backhaul signaling;
determining the identifier from an operator identifier; or
a combination thereof.

6. The method of claim 1, further comprising:
receiving a second channel reservation message;
identifying the second channel reservation message as including the identifier; and
excluding, based on the identifying, the second channel reservation message from i) one or more medium access control calculations, ii) one or more Network Allocation Vector, NAV, settings associated with the second RAT, or iii) a combination thereof.

7. The method of claim 1, further comprising:
monitoring the communication medium for first RAT signaling and second RAT signaling prior to a target active period of the DTX communication pattern; and
commencing the target active period of the DTX communication pattern at a floating time following a preceding inactive period of the DTX communication pattern based on the monitoring.

8. The method of claim 7:
the monitoring comprising measuring a signaling energy on the communication medium; and
the commencing comprising delaying the target active period in relation to the preceding inactive period in response to the signaling energy exceeding a threshold.

9. The method of claim 7:
the monitoring comprising decoding the first RAT signaling, the second RAT signaling, or both; and
the commencing comprising delaying the target active period in relation to the preceding inactive period in response to the decoded signaling indicating a channel reservation.

10. The method of claim 7, the transmitting comprising transmitting, over the communication medium, the channel reservation message associated with the second RAT to reserve the communication medium for the target active period based on a triggering condition.

11. The method of claim 10, the triggering condition comprising a degradation of first RAT signaling, a degradation of second RAT signaling, a detection of one or more hidden second RAT nodes, or a combination thereof.

12. The method of claim 1, the communication medium comprising one or more time, frequency, or space resources on an unlicensed radio frequency band.

13. The method of claim 1:
the communication medium comprising one or more time, frequency, or space resources on an unlicensed radio frequency band;
the first RAT comprising Long Term Evolution, LTE, technology; and
the second RAT comprising Wi-Fi technology.

14. A communication apparatus, comprising:
means for cycling operation (902) of a first Radio Access Technology, RAT, between active periods (304) and inactive periods (306) of transmission, on a communication medium (132) shared with a second RAT, in accordance with a Discontinuous Transmission, DTX, communication pattern, **characterized by**:
means for selecting (904) an identifier indicating first RAT operation; and
means for transmitting (906), over the communication medium (132), a channel reservation message (410) associated with the second RAT to reserve the communication medium (132) for one of the active periods (304) of the first RAT, the channel reservation message (410) including the identifier.

15. A computer-readable medium storing instructions executable by a computer, the instructions, when executed by a computer, result in the performance of all the steps of any of claims 1 to 13.

## Patentansprüche

1. Ein Kommunikationsverfahren, das Folgendes aufweist:
einen zyklisch durchlaufenden Betrieb (902) einer ersten Funkzugriffstechnologie bzw. RAT (RAT = Radio Access Technology) zwischen aktiven Perioden (304) und inaktiven Perioden (306) einer Sendung auf einem Kommunikationsmedium (132), das mit einer zweiten RAT gemeinsam verwendet wird, gemäß einem Kommunikationsmuster mit diskontinuierlicher Sendung bzw. einem DTX-Kommunikationsmuster (DTX = Discontinuous Transmission), **gekennzeichnet durch**:
Auswählen (904) eines Identifikators, der einen Betrieb einer ersten RAT anzeigt; und
Senden (906), über das Kommunikationsmedium (132), einer Kanalreservierungsnachricht (410), die mit der zweiten RAT assoziiert ist, zum Reservieren des Kommunikationsmediums (132) für eine der aktiven Perioden (304) der ersten RAT, wobei die Kanalreservierungsnachricht (410) den Identifikator aufweist.

2. Verfahren nach Anspruch 1, wobei die Kanalreservierungsnachricht wenigstens eines von einer CTS2S-Nachricht (CTS2S = Clear-to-Send-to-Self), die durch die zweite RAT definiert wird, einer RTS-Nachricht (RTS = Request-to-Send), die durch die zweite RAT definiert wird, einer CTS-Nachricht (CTS = Clear-to-Send), die durch die zweite RAT definiert wird, einem PLCP-Header (PLCP = Physical Layer Convergence Protocol), der durch die zweite RAT definiert wird oder eine Kombination davon aufweist.

3. Verfahren nach Anspruch 1, wobei der Identifikator eine BSSID (BSSID = Basic Service Set Identifier), die ausgewählt ist einen Betrieb einer ersten RAT anzuzeigen, eine Empfängeradresse bzw. RA (RA = Receiver Address), die ausgewählt ist einen Betrieb einer ersten RAT anzuzeigen, einen Bereich von Dauerwerten, der ausgewählt ist einen Betrieb einer ersten RAT anzuzeigen, einen Dauerschwellenwert, der ausgelegt ist einen Betrieb einer ersten RAT anzuzeigen, einen PHY-Header-Scrambler-Seed bzw. - Verwürfelungselementausgangswert (PHY = Physical), der ausgewählt ist einen Betrieb einer ersten RAT anzuzeigen, einen PHY-Header-Nutzeridentifikator, der ausgewählt ist einen Betrieb einer ersten RAT anzuzeigen oder eine Kombination davon aufweist.

4. Verfahren nach Anspruch 1, wobei der Identifikator zwischen wenigstens zwei Zugriffspunkten koordiniert wird.

5. Verfahren nach Anspruch 4, das weiter Folgendes aufweist:
Bestimmen des Identifikators aus Backhaul-Signalisierung;
Bestimmen des Identifikators aus einem Betreiberidentifikator; oder
eine Kombination davon.

6. Verfahren nach Anspruch 1, das weiter Folgendes aufweist:
Empfangen einer zweiten Kanalreservierungsnachricht;
Identifizieren, dass die zweite Kanalreservierungsnachricht den Identifikator beinhaltet; und
Ausschließen, basierend auf dem Identifizieren, der zweiten Kanalreservierungsnachricht aus i) einer oder mehreren Medienzugriffssteuerungsberechnungen, ii) einer oder mehreren Netzwerkvektorzuteilungs- bzw. NAV-Einstellungen (NAV = Network Allocation Vector), die mit der zweiten RAT assoziiert sind, oder iii) einer Kombination davon.

7. Verfahren nach Anspruch 1, das weiter Folgendes aufweist:
Überwachen des Kommunikationsmediums hinsichtlich Signalisierung einer ersten RAT und Signalisierung einer zweiten RAT vor einer Zielaktivperiode des DTX-Kommunikationsmusters; und
Beginnen der Zielaktivperiode des DTX-Kommunikationsmusters zu einer schwebenden bzw. verschiebbaren Zeit nachfolgend auf eine vorhergehende inaktive Periode des DTX-Kommunikationsmusters basierend auf der Überwachung.

8. Verfahren nach Anspruch 7:
wobei das Überwachen Messen einer Signalenergie auf dem Kommunikationsmedium aufweist; und
das Beginnen Verzögern der Zielaktivperiode in Bezug auf die vorhergehende inaktive Periode ansprechend darauf aufweist, dass die Signalisierungsenergie einen Schwellenwert überschreitet.

9. Verfahren nach Anspruch 7,
wobei das Überwachen Decodieren der Signalisierung der ersten RAT, der Signalisierung der zweiten RAT oder von beidem aufweist; und
das Beginnen Verzögern der Zielaktivperiode in Bezug auf die vorhergehende inaktive Periode ansprechend darauf aufweist, dass die decodierte Signalisierung eine Kanalreservierung anzeigt.

10. Verfahren nach Anspruch 7, wobei das Senden Senden, über das Kommunikationsmedium, der Kanalreservierungsnachricht, die mit der zweiten RAT assoziiert ist, aufweist, um das Kommunikationsmedium für die Zielaktivperiode basierend auf einer Auslösebedingung zu reservieren.

11. Verfahren nach Anspruch 10, wobei die Auslösebedingung eine Verschlechterung einer Signalisierung einer ersten RAT, eine Verschlechterung einer Signalisierung einer zweiten RAT, eine Detektion von einem oder mehreren versteckten Knoten der zweiten RAT oder eine Kombination davon aufweist.

12. Verfahren nach Anspruch 1, wobei das Kommunikationsmedium eine oder mehrere Zeit-, Frequenz- oder Raumressourcen auf einem unlizenzierten Funkfrequenzband bzw. Hochfrequenzband aufweist.

13. Verfahren nach Anspruch 1:
wobei das Kommunikationsmedium eine oder mehrere Zeit-, Frequenz- oder Raumressourcen auf einem unlizenzierten Hochfrequenzband aufweist;
die erste RAT LTE-Technologie (LTE = Long Term Evolution) aufweist; und die zweite RAT Wi-Fi-Technologie aufweist.

14. Eine Kommunikationsvorrichtung, die Folgendes aufweist:
Mittel für einen zyklisch durchlaufenden Betrieb (902) einer ersten Funkzugriffstechnologie bzw. RAT (RAT = Radio Access Technology) zwischen aktiven Perioden (304) und inaktiven Perioden (306) einer Sendung auf einem Kommunikationsmedium (132), das mit einer zweiten RAT gemeinsam verwendet wird, gemäß einem Kommunikationsmuster mit diskontinuierlicher Sendung bzw. einem DTX-Kommunikationsmuster (DTX = Discontinuous Transmission), **gekennzeichnet durch**:
Mittel zum Auswählen (904) eines Identifikators, der einen Betrieb einer ersten RAT anzeigt; und
Mittel zum Senden (906), über das Kommunikationsmedium (132), einer Kanalreservierungsnachricht (410), die mit der zweiten RAT assoziiert ist, zum Reservieren des Kommunikationsmediums (132) für eine der aktiven Perioden (304) der ersten RAT, wobei die Kanalreservierungsnachricht (410) den Identifikator aufweist.

15. Ein computerlesbares Medium, das Instruktionen speichert, die durch einen Computer ausgeführt werden können, wobei die Instruktionen, wenn sie durch einen Computer ausgeführt werden, zu der Durchführung aller Schritte nach einem der Ansprüche 1 bis 13 führen.

## Revendications

1. Un procédé de communication, comprenant :
le cyclage du fonctionnement (902) d'une première technologie d'accès radio, RAT, entre des périodes actives (304) et des périodes inactives (306) de transmission, sur un support de communication (132) partagé avec une deuxième RAT, conformément à un modèle de communication à transmission discontinue, DTX, **caractérisé par** :
la sélection (904) d'un identifiant indiquant un fonctionnement d'une première RAT, et
la transmission (906), par l'intermédiaire du support de communication (132), d'un message de réservation de canal (410) associé à la deuxième RAT de façon à réserver le support de communication (132) pour une des périodes actives (304) de la première RAT, le message de réservation de canal (410) contenant l'identifiant.

2. Le procédé selon la Revendication 1, le message de réservation de canal contenant au moins un élément parmi un message prêt à émettre à soi-même, CTS2S, défini par la deuxième RAT, un message de demande d'envoi, RTS, défini par la deuxième RAT, un message prêt à envoyer, CTS, défini par la deuxième RAT, un entête de protocole de convergence de couche physique, PLCP, défini par la deuxième RAT, ou une combinaison de ceux-ci.

3. Le procédé selon la Revendication 1, l'identifiant comprenant un identifiant d'ensemble de services de base, BSSID, sélectionné de façon à indiquer un fonctionnement d'une première RAT, une adresse de récepteur, RA, sélectionnée de façon à indiquer un fonctionnement d'une première RAT, une plage de valeurs de durée sélectionnée de façon à indiquer un fonctionnement d'une première RAT, un seuil de durée sélectionné de façon à indiquer un fonctionnement d'une première RAT, une valeur initiale de brouilleur d'entête physique, PHY, sélectionnée de façon à indiquer un fonctionnement d'une première RAT, un identifiant d'utilisateur d'entête PHY sélectionné de façon à indiquer un fonctionnement d'une première RAT, ou une combinaison de ceux-ci.

4. Le procédé selon la Revendication 1, l'identifiant étant coordonné parmi au moins deux points d'accès.

5. Le procédé selon la Revendication 4, comprenant en outre :
la détermination de l'identifiant à partir d'une signalisation de liaison terrestre,
la détermination de l'identifiant à partir d'un identifiant d'opérateur, ou
une combinaison de ceux-ci.

6. Le procédé selon la Revendication 1, comprenant en outre :
la réception d'un deuxième message de réservation de canal,
l'identification du deuxième message de réservation de canal comme contenant l'identifiant, et
l'exclusion, en fonction de l'identification, du deuxième message de réservation de canal de i) un ou plusieurs calculs de contrôle d'accès au support, ii) un ou plusieurs réglages de vecteur d'attribution de réseau, NAV, associés à la deuxième RAT, ou iii) une combinaison de ceux-ci.

7. Le procédé selon la Revendication 1, comprenant en outre :
la surveillance du support de communication à la recherche d'une signalisation de première RAT et d'une signalisation de deuxième RAT avant une période active cible du modèle de communication DTX, et
le démarrage de la période active cible du modèle de communication DTX à un instant flottant suivant une période inactive précédente du modèle de communication DTX en fonction de la surveillance.

8. Le procédé selon la Revendication 7 :
la surveillance comprenant la mesure d'une énergie de signalisation sur le support de communication, et
le démarrage comprenant le retardement de la période active cible en relation avec la période inactive précédente en réponse au dépassement d'un seuil par l'énergie de signalisation.

9. Le procédé selon la Revendication 7 :
la surveillance comprenant le décodage de la signalisation de première RAT, de la signalisation de deuxième RAT, ou des deux, et
le démarrage comprenant le retardement de la période active cible en relation avec la période inactive précédente en réponse à l'indication par la signalisation décodée d'une réservation de canal.

10. Le procédé selon la Revendication 7, la transmission comprenant la transmission, par l'intermédiaire du support de communication, du message de réservation de canal associé à la deuxième RAT de façon à réserver le support de communication pour la période active cible en fonction d'une condition de déclenchement.

11. Le procédé selon la Revendication 10, la condition de déclenchement comprenant une dégradation d'une signalisation de première RAT, une dégradation d'une signalisation de deuxième RAT, une détection d'un ou de plusieurs noeuds de deuxième RAT masqués, ou une combinaison de celles-ci.

12. Le procédé selon la Revendication 1, le support de communication comprenant une ou plusieurs ressources de temps, de fréquence ou d'espace sur une bande de fréquences radio sans licence.

13. Le procédé selon la Revendication 1 :
le support de communication comprenant une ou plusieurs ressources de temps, de fréquence ou d'espace sur une bande de fréquences radio sans licence,
la première RAT comprenant une technologie d'évolution à long terme, LTE, et
la deuxième RAT comprenant une technologie Wi-Fi.

14. Un appareil de communication, comprenant :
un moyen de cyclage du fonctionnement (902) d'une première technologie d'accès radio, RAT, entre des périodes actives (304) et des périodes inactives (306) de transmission, sur un support de communication (132) partagé avec une deuxième RAT, conformément à un modèle de communication à transmission discontinue, DTX, **caractérisé par** :
un moyen de sélection (904) d'un identifiant indiquant un fonctionnement d'une première RAT, et
un moyen de transmission (906), par l'intermédiaire du support de communication (132), d'un message de réservation de canal (410) associé à la deuxième RAT de façon à réserver le support de communication (132) pour une des périodes actives (304) de la première RAT, le message de réservation de canal (410) contenant l'identifiant.

15. Un support lisible par ordinateur conservant en mémoire des instructions exécutables par un ordinateur, les instructions, lorsqu'elles sont exécutées par un ordinateur, résultent en l'exécution de la totalité des opérations selon l'une quelconque des Revendications 1 à 13.
